# EUROPEAN PATENT SPECIFICATION

(11) **EP 3 681 784 B1**
(45) Date of publication and mention of the grant of the patent: **27.07.2022**
(21) Application number: 17767831.5
(22) Date of filing: 15.09.2017
(51) Int. Cl.: B62D 5/00, B62D 15/02

(54) **ACTUATOR SYNCHRONIZATION IN A STEER-BY-WIRE STEERING SYSTEM**
AKTUATORSYNCHRONISIERUNG IN EINEM STEER-BY-WIRE-LENKSYSTEM
SYNCHRONISATION D'ACTIONNEUR DANS UN SYSTÈME DE DIRECTION À COMMANDE ÉLECTRIQUE

(43) Date of publication of application: 22.07.2020
(73) Proprietor: thyssenkrupp Presta AG, 9492 Eschen (LI); thyssenkrupp AG, 45143 Essen (DE)
(72) Inventor: SZEPESSY, Imre, 9493 Mauren (LI); HORVÁTH, Gergely, 6085 Fülöpszállás (HU)
(74) Representative: thyssenkrupp Intellectual Property GmbH
(86) International application number: PCT/EP2017/073240
(87) International publication number: WO 2019/052651

(56) References cited:
- EP-A2- 1 308 367
- EP-A2- 2 248 711
- WO-A1-2004/065195
- DE-A1-102011 002 925
- US-A1- 2015 051 794

## Description

The present invention relates to a method for maintaining synchronization of a feedback actuator with a steering actuator in a steer-by-wire steering system of a motor vehicle according to the preamble of claim 1.

In a steer-by-wire steering system, the vehicle's steering wheel is disengaged from the steering mechanism. In such a steering system, there is no mechanical coupling between the steering wheel and the steering gear. Steering movement is achieved by a steering actuator with an electric motor. The steering actuator operates in response to detected values of various steering parameters, such as steering wheel angle and vehicle speed etc. The detected values are communicated electronically to the steering actuator from sensors, whereby the electric motor drives the rack and orients the steerable wheels in the desired direction.

Even though the mechanical linkage between the steering wheel and the road wheels has been eliminated, a steer-by-wire steering system is expected to produce the same functions and steering feel as a conventional mechanically linked steering system. The forces generated in moving the road wheels have to be fed back to the steering wheel to provide information for directional control to the driver. The feedback also contributes to a feeling of steering referred to as steering feel. In steer-by-wire steering systems the feedback and steering feel respectively is generated with a feedback actuator connected to the steering wheel. One necessity of a steer-by-wire steering system is a feedback actuator to steering actuator synchronization. The synchronization is problematic, if the road wheels are turned by hand e.g. to be able to repair suspension components or other parts in workshops. Furthermore the synchronization is problematic, if the steering wheel is turned by hand when the system is turned off (e.g. while getting into the car or out of the car). This moves the steering actuator and changes its position, which leads to an undesired offset in the steering system.

From EP 1 308 367 A2 an actuator synchronization and locking concept for steer by wire applications is known. When turning on an ignition switch an initial condition of the vehicle is evaluated. The initial condition is associated to the positions of a steering input device and a steerable device as registered by a steering input device actuator and a steerable device actuator. The steerable device actuator is disposed in electronic communication with the steering input device actuator such that synchronous positioning of the steering input device actuator and the steerable device actuator can be effectuated by the system upon startup of the vehicle.

EP 2 248 711 A2 describes an electric power steering (EPS) apparatus in which the rotational angle of the EPS motor is obtained from a resolver at an initial stage and at a final stage of an idle stop state. If any difference in rotational angle during idle stop is determined, the learned steering angle obtained from a steering sensor during normal operation is corrected/overwritten.

Similarly, US 2015/0051794 A1 describes a steering angle detecting apparatus for an electric power steering apparatus in which after a system shutdown a provisional absolute steering angle is calculated from a stored absolute steering angle value obtained before the system was shut down and a relative steering angle obtained from a motor angle sensor. The provisional absolute steering angle calculated value is substituted by an absolute steering angle calculated value as soon as the neutral point of the steering system was estimated after powering up the system again.

DE 10 2011 002 925 A1 relates to a power-on-demand steering wheel angle sensor. In order to determine the steering angle even during periods in which the system is shut off without wasting valuable battery power a steering wheel angle sensor for an electric power steering apparatus is proposed having an electric supply switch that is activated by any movement the steering wheel or steering shaft, such that a new steering angle can be determined and stored. After a pre-determined time-period the supply switch is deactivated again.

It is an object of the present invention to provide a method for maintaining synchronization of a feedback actuator with a steering actuator in a steer-by-wire steering system of a motor vehicle.

This object is achieved by a method having the features of claim 1.

Accordingly, a method for maintaining synchronization of a feedback actuator with a steering actuator in a steer-by-wire steering system of a motor vehicle, the steer-by-wire steering system having a steering wheel, a feedback actuator connected to the steering wheel for providing road feedback to a driver, a plurality of road wheels, and a steering actuator with an electric motor, which operates in response to detected values of various steering parameters and orientates the road wheels in a desired direction, wherein movement of the feedback actuator is synchronized with movement of the steering actuator, wherein said method comprises the steps of:
- Detecting a rotation of the electric motor's rotor caused by movement of the road wheels and detecting a movement of the steering wheel while the system is turned off by at least two angle sensors, being a rotor position sensor and a steering angle sensor on the steering column, respectively;
- If the movement is detected, the position change is registered in a storage means;
- On ignition on, moving the feedback actuator or the steering actuator in accordance with the detected movement to maintain the synchronization of the feedback actuator with the steering actuator.

This way the synchronization is not lost, if the road wheels and/or the steering wheel are moved externally e.g. in the workshop.

To regain synchronization two options are possible:
- The steering actuator will follow the position of the feedback actuator and they will be synced. The steer-by-wire system does not have to move the steering wheel, so the driver will not notice the synchronization. During the movement the steering actuator has limited actuator torque to ensure safe movement. If this scenario is not possible the system will try the second option. For example, if any obstacle prevents turning of the wheels the torque limit will be exceeded and the synchronization will be stopped.
- During the second option the feedback actuator will follow the position of steering actuator in order to be synced. The vehicle will signal the driver about the situation and will move the steering wheel with limited torque. During the movement if the current of the feedback actuator rises over the limit, the steer-by-wire system will shut down the feedback actuator. In the next cycle the system will try it again.

Preferably, at least one angle sensor has a sleep-mode, which wakes-up the angle sensor periodically to detect and measure the rotation of the electric motor's rotor.

In another preferred embodiment the angle sensor wakes up upon a movement of either the rotor of the electric motor of the road wheel actuator or the rotor of the motor of the feedback actuator.

In a preferred embodiment the steering actuator is a rack actuator, which causes axial displacement of a steering rack for steering of the road wheels.

The steering actuator can as well be a road wheel actuator, which is arranged in proximity to a road wheel, wherein the road wheel is rotatably and operably connected to said steering actuator. In this case each road wheel has an assigned steering actuator. This way the steer-by-wire system is capable of steering the steerable road wheels independently of each other.

A preferred embodiment of the present invention will be described with reference to the drawing.

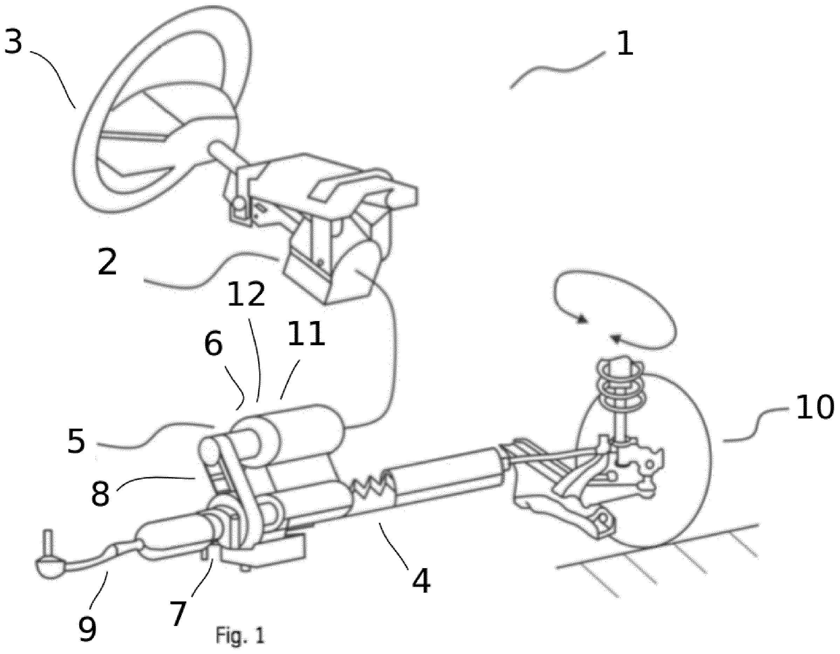

Figure 1 shows a schematic illustration of a state of the art steer-by-wire steering system 1 of a motor vehicle. A feedback actuator 2 is connected to a steering wheel 3 in order to generate a steering feel. A rack 4 is driven by a steering actuator 5 having an electric motor 6 which is connected to a ball screw 7 arranged on the rack 4 via a belt drive 8. Rotation of the ball screw 7 leads to axial displacement of the rack 4. Steering rack rods 9 are connected to the rack 4 and to steered road wheels 10 of the motor vehicle. An electronic control unit (ECU) 11 controlling the electric motor 6 forms part of the steering actuator 5. The ECU can however be placed separately.

The steering actuator 5 further has a rotor angle sensor 12.

In order to maintain the synchronization between the feedback actuator and the steering actuator, e.g. if the road wheels are turned by hand or the steering wheel is moved externally, the movement is detected and on ignition on the feedback actuator or the steering actuator is moved in accordance with the detected movement. For that the steering actuator can be equipped with a sleep-mode rotor angle sensor, which is turned on periodically to detect and measure the rotation of the electric motor's rotor. The synchronization includes two options; First of all the steering actuator will follow the position of the feedback actuator and they will be synced. The steer-by-wire system does not have to move the steering wheel, so the driver will not notice the synchronization. During the movement the steering actuator has limited actuator torque to ensure safe movement. If this scenario is not possible the system will try the second option. For example, if any obstacle prevents turning of the wheels the torque limit will be exceeded and the synchronization will be stopped.

During the second option the feedback actuator will follow the position of steering actuator in order to be synced. The vehicle will signal the driver about the situation and will move the steering wheel with limited torque. During the movement if the current of the feedback actuator rises over the limit, the steer-by-wire system will shut down the feedback actuator. In the next cycle the system will try it again.

This method provides seamless maintaining of synchronization of the feedback actuator and the steering actuator and can be used after any repairs and/or reinitialization of steering actuator position.

The method is not limited to a steering actuator with ball screw mechanism or steering actuators arranged at a rack in general. In another embodiment the steer-by-wire steering system has steering actuators, which are arranged directly at the road wheels.

## Claims

1. A method for maintaining synchronization of a feedback actuator (2) with a steering actuator (5) in a steer-by-wire steering system (1) of a motor vehicle, the steer-by-wire steering system (1) having a steering wheel (3), a feedback actuator (2) connected to the steering wheel (3) for providing road feedback to a driver, a plurality of road wheels (10), and a steering actuator (5) with an electric motor (6) which operates in response to detected values of various steering parameters and orientates the road wheels (10) in a desired direction, wherein movement of the feedback actuator (2) is synchronized with movement of the steering actuator (5), **characterized in that** said method comprises the steps of:
• Detecting a rotation of the electric motor's rotor caused by movement of the road wheels (10) and detecting a movement of the steering wheel while the system (1) is turned off by at least two angle sensors (12), being a rotor position sensor and a steering angle sensor on the steering column, respectively;
• If a movement is detected, the position change is registered in a storage means;
• On ignition on, moving the feedback actuator (2) or the steering actuator (5) in accordance with the stored position change to maintain the synchronization of the feedback actuator (2) with the steering actuator (5).

2. Method according to claim 1, **characterized in that** at least one of the angle sensors (12) has a sleep-mode which wakes-up the angle sensor periodically to detect and measure the rotation of the electric motor's rotor.

3. Method according to claim 1 or 2, **characterized in that** the steering actuator (5) is a rack actuator, which causes axial displacement of a steering rack (4) for steering of the road wheels (10).

4. Method according to claim 1 or 2, **characterized in that** the steering actuator (5) is a road wheel actuator, which is arranged in proximity to the road wheels (10), wherein the road wheel (10) is rotatably and operably connected to said steering actuator (5).

5. Method according to any one of the preceding claims, **characterized in that** the steering actuator (5) is following the position of the feedback actuator (2) in order to be synced, with the steering wheel (3) not moving, and wherein during movement the steering actuator (5) has limited actuator torque to ensure safe movement.

6. Method according to claim 5, **characterized in that** if the turning of the road wheels (10) is prevented by any obstacle, the torque limit is exceeded and the synchronization is stopped.

7. Method according to any of the preceding claims 1 to 4, **characterized in that** the feedback actuator (2) follows the position of the steering actuator (5) in order to be synced, having the vehicle signaling the driver about the movement of the steering wheel (3) and that the feedback actuator (2) is moving the steering wheel (3) with limited torque.

8. Method according to claim 7, **characterized in that** the steer-by-wire system (1) shuts down the feedback actuator (2) if the current of the feedback actuator (2) rises over a predefined limit.

9. Method according to claim 8, **characterized in that** the system (1) will retry the synchronization process.

## Patentansprüche

1. Verfahren zum Aufrechterhalten einer Synchronisation eines Feedback-Aktuators (2) mit einem Lenkaktuator (5) in einem Steer-by-Wire-Lenksystem (1) eines Kraftfahrzeugs, wobei das Steer-by-Wire-Lenksystem (1) ein Lenkrad (3), einen Feedback-Aktuator (2), der mit dem Lenkrad (3) verbunden ist, um einem Fahrer Rückwirkungen der Straße bereitzustellen, eine Mehrzahl von Straßenrädern (10) und einen Lenkaktuator (5) mit einem Elektromotor (6), der in Reaktion auf detektierte Werte von verschiedenen Lenkparametern arbeitet und die Straßenräder (10) in einer gewünschten Richtung ausrichtet, aufweist, wobei eine Bewegung des Feedback-Aktuators (2) mit einer Bewegung des Lenkaktuators (5) synchronisiert wird, **dadurch gekennzeichnet, dass** das Verfahren die folgenden Schritte umfasst:
• Detektieren einer durch eine Bewegung der Straßenräder (10) bewirkten Drehung des Rotors des Elektromotors und Detektieren einer Bewegung des Lenkrads, während das System (1) abgeschaltet ist, durch mindestens zwei Winkelsensoren (12) die ein Rotorpositionssensor bzw. ein Lenkwinkelsensor an der Lenksäule sind;
• Wenn eine Bewegung detektiert wird, wird die Positionsänderung in einem Speichermittel festgehalten;
• Bei eingeschalteter Zündung, Bewegen des Feedback-Aktuators (2) oder des Lenkaktuators (5) gemäß der gespeicherten Positionsänderung, um die Synchronisation des Feedback-Aktuators (2) mit dem Lenkaktuator (5) aufrechtzuerhalten.

2. Verfahren nach Anspruch 1, **dadurch gekennzeichnet, dass** mindestens einer der Winkelsensoren (12) einen Ruhemodus aufweist, der den Winkelsensor periodisch zum Detektieren und Messen der Drehung des Rotors des Elektromotors aufweckt.

3. Verfahren nach Anspruch 1 oder 2, **dadurch gekennzeichnet, dass** der Lenkaktuator (5) ein Zahnstangenaktuator ist, der eine Axialverschiebung einer Lenkzahnstange (4) zum Lenken der Straßenräder (10) bewirkt.

4. Verfahren nach Anspruch 1 oder 2, **dadurch gekennzeichnet, dass** der Lenkaktuator (5) ein Straßenradaktuator ist, der in der Nähe zu den Straßenrädern (10) angeordnet ist, wobei das Straßenrad (10) mit dem Lenkaktuator (5) drehbar und wirksam verbunden ist.

5. Verfahren nach einem der vorhergehenden Ansprüche, **dadurch gekennzeichnet, dass** der Lenkaktuator (5) der Position des Feedback-Aktuators (2) folgt, um synchronisiert zu werden, wobei sich das Lenkrad (3) nicht bewegt, und wobei während einer Bewegung der Lenkaktuator (5) ein begrenztes Aktuatordrehmoment aufweist, um eine sichere Bewegung sicherzustellen.

6. Verfahren nach Anspruch 5, **dadurch gekennzeichnet, dass,** wenn die Umdrehung der Straßenräder (10) durch ein Hindernis verhindert wird, die Drehmomentgrenze überschritten wird und die Synchronisation gestoppt wird.

7. Verfahren nach einem der vorhergehenden Ansprüche 1 bis 4, **dadurch gekennzeichnet, dass** der Feedback-Aktuator (2) der Position des Lenkaktuators (5) folgt, um synchronisiert zu werden, wobei das Fahrzeug veranlasst wird, dem Fahrer die Bewegung des Lenkrads (3) zusignalisieren, und dass der Feedback-Aktuator (2) das Lenkrad (3) mit verringertem Drehmoment bewegt.

8. Verfahren nach Anspruch 7, **dadurch gekennzeichnet, dass** das Steer-by-Wire-System (1) den Feedback-Aktuator (2) außer Betrieb setzt, wenn der Strom des Feedback-Aktuators (2) über eine vordefinierte Grenze steigt.

9. Verfahren nach Anspruch 8, **dadurch gekennzeichnet, dass** das System (1) den Synchronisationsprozess erneut versuchen wird.

## Revendications

1. Procédé pour maintenir la synchronisation d'un actionneur de rétroaction (2) avec un actionneur de direction (5) dans un système de direction à commande électrique (1) d'un véhicule à moteur, le système de direction à commande électrique (1) ayant un volant (3), un actionneur de rétroaction (2) raccordé au volant (3) pour fournir une rétroaction routière à un conducteur, une pluralité de roues (10), et un actionneur de direction (5) avec un moteur électrique (6) qui fonctionne en réponse à des valeurs détectées de divers paramètres de direction et oriente les roues (10) dans une direction souhaitée, dans lequel un mouvement de l'actionneur de rétroaction (2) est synchronisé avec un mouvement de l'actionneur de direction (5), **caractérisé en ce que** ledit procédé comprend les étapes de :
• détection d'une rotation du rotor du moteur électrique causée par un mouvement des roues (10) et détection d'un mouvement du volant pendant que le système (1) est éteint par au moins deux capteurs d'angle (12), lesquels sont un capteur de position de rotor et un capteur d'angle de direction sur la colonne de direction, respectivement ;
• si un mouvement est détecté, le changement de position est enregistré dans un moyen de stockage ;
• à l'état allumé, déplacement de l'actionneur de rétroaction (2) ou de l'actionneur de direction (5) conformément au changement de position stocké pour maintenir la synchronisation de l'actionneur de rétroaction (2) avec l'actionneur de direction (5).

2. Procédé selon la revendication 1, **caractérisé en ce qu'au** moins l'un des capteurs d'angle (12) a un mode veille qui active le capteur d'angle périodiquement pour détecter et mesurer la rotation du rotor du moteur électrique.

3. Procédé selon la revendication 1 ou 2, **caractérisé en ce que** l'actionneur de direction (5) est un actionneur à crémaillère, qui entraîne un déplacement axial d'une crémaillère de direction (4) pour diriger les roues (10).

4. Procédé selon la revendication 1 ou 2, **caractérisé en ce que** l'actionneur de direction (5) est un actionneur de roue, qui est agencé à proximité des roues (10), dans lequel la roue (10) est rotative et raccordée de manière opérationnelle audit actionneur de direction (5).

5. Procédé selon l'une quelconque des revendications précédentes, **caractérisé en ce que** l'actionneur de direction (5) suit la position de l'actionneur de rétroaction (2) afin d'être synchronisé, le volant (3) ne bougeant pas, et dans lequel pendant le mouvement l'actionneur de direction (5) a un couple d'actionneur limité pour assurer un mouvement sécurisé.

6. Procédé selon la revendication 5, **caractérisé en ce que** si la rotation des roues (10) est empêchée par un quelconque obstacle, la limite de couple est dépassée et la synchronisation est arrêtée.

7. Procédé selon l'une quelconque des revendications précédentes 1 à 4, **caractérisé en ce que** l'actionneur de rétroaction (2) suit la position de l'actionneur de direction (5) afin d'être synchronisé, amenant le véhicule à signaler au conducteur le mouvement du volant (3) et **en ce que** l'actionneur de rétroaction (2) déplace le volant (3) avec un couple limité.

8. Procédé selon la revendication 7, **caractérisé en ce que** le système à commande électrique (1) éteint l'actionneur de rétroaction (2) si le courant de l'actionneur de rétroaction (2) dépasse une limite prédéfinie.

9. Procédé selon la revendication 8, **caractérisé en ce que** le système (1) réessaiera le processus de synchronisation.
